# EUROPÄISCHE PATENTANMELDUNG

(11) **EP 2 078 556 A2**
(43) Veröffentlichungstag der Anmeldung: **15.07.2009**
(21) Anmeldenummer: 09000370.8
(22) Anmeldetag: 13.01.2009
(51) Int. Cl.: B01D 61/02, B01D 61/14, B01D 63/06, B01D 63/10, B01D 63/16

(54) **Verfahren und Vorrichtung zur Filtration von Produktgemischen**

(30) Priorität: 14.01.2008 DE 102008004237; 09.05.2008 DE 202008006386 U
(71) Anmelder: PS Prozesstechnik GmbH, 4002 Basel (CH)
(72) Erfinder: Schirg, P. Dr., 4002 Basel (CH)
(74) Vertreter: Klingseisen, Franz

(57) **Zusammenfassung**

Die Erfindung betrifft ein Verfahren zum Separieren bzw. Filtrieren eines Produktes, insbesondere eines Produktstromes, bei dem in einem Filtrationsbereich eine Filter- bzw. Membranfläche (42) über dem Produkt bzw. Produktstrom (P,R) positioniert und die spezifische leichtere Komponente nach oben durch die Filterfläche abgeführt wird, so dass die Filtration entgegen der Schwerkraft erfolgt, oder indem die Membran rotiert wird und die Filtration entgegen der Zentrifugalkraft erfolgt.

## Beschreibung

Die Erfindung betrifft ein Verfahren und eine Vorrichtung zum Separieren verschiedener Produkte, insbesondere Produktströme.

Bei der Filtration ist es bekannt, einen unter Druck in den Filtrationsbereich zugeführten Produktstrom über eine unter dem Produktstrom angeordnete Filterfläche oder eine Membran zu führen, wobei die eine abzutrennende Komponente durch den Filter nach unten austritt und als Permeat abgeführt wird, während die über dem Filter zurückgehaltene Komponente den Filterbereich als Retentat verlässt und gegebenenfalls zurückgeführt wird. Damit sich die zurückgehaltene Komponente nicht auf der Filterfläche absetzt und die Filterwirkung beeinträchtigt, kann ein Rührwerk verwendet werden, das über der Filterfläche angeordnet wird, um die zurückgehaltene Komponente im Produktstrom in Bewegung zu halten, damit sie mit der Strömung wieder abgeführt wird. Bei der in der Membranfiltration (Mikro-, Ultra-, Nanofiltration und Umkehrosmose) üblichen Querstromfiltration wird meist eine schnelle Überströmung der Filterfläche durch Pumpen vorgesehen, um eine Akkumulation der zurückgehaltenen Komponente auf der Membran (Konzentrationspolarisation) zu begrenzen. Die Überströmgeschwindigkeit beträgt in Rohr- und Kapillarmembranen dabei typisch 1-6m/s. Damit wird eine turbulente Strömung mit Reynoldszahlen über 2300 angestrebt. Diese Überströmung der Filterfläche beträgt ein Vielfaches des Permeatflusses durch den Filter. Hierdurch ist ein erhöhter Energieaufwand erforderlich, der nur zum Teil z. B. durch eine Turbine in Retentatstrom, wie dies bei großen Meerwasserentsalzungsanlagen der Fall ist, zurückgewonnen werden kann oder durch Einsatz einer getrennten Druckerzeugungs- und Überströmungspumpe reduziert werden kann. In beiden Fällen ist ein relativ hoher technischer Aufwand erforderlich.

Der Erfindung liegt die Aufgabe zugrunde, den Filtervorgang so zu gestalten, dass ohne großen apparativen Aufwand gute Filterergebnisse erzielt werden.

Diese Aufgabe wird erfindungsgemäß durch die Merkmale in den Ansprüchen 1 und 5 gelöst. Dadurch, dass das zu filternde Produkt nicht über, sondern unter der Filterfläche zugeführt wird häuft sich an der Filterfläche kein Retentat ab, das üblicherweise eine höhere Dichte hat, sondern geht zurück in den Produktstrom, sodass es mit diesem aus dem Filterbereich ausgetragen werden kann, während andererseits durch den im Produktstrom vorhandenen Druck das Permeat ungehindert nach oben durch den Filter tritt.

Die Erfindung wird beispielsweise anhand der Zeichnung näher erläutert. Es zeigen
- Fig. 1: schematisch eine Anordnung bei der herkömmlichen Querstromfiltration,
- Fig. 2: schematisch den Filterbereich nach der erfindungsgemäßen Ausgestaltung,
- Fig. 3: schematisch übereinander angeordnete Plattenmodule,
- Fig. 4: eine Abwandlung der erfindungsgemässen Filteranordnung,
- Fig. 5: eine Filtervorrichtung für die Membrankristallisation,
- Fig. 6: eine Filterzelle,
- Fig. 7: eine Filterzelle mit Magnetrührer,
- Fig. 8: Details einer Filterzelle mit Magnetrührer,
- Fig. 9: eine abgewandelte Form einer Filterzelle mit Magnetrührer,
- Fig. 10: in perspektivischer Ansicht schematisch ein rotierendes Filtermodul in Rohrform,
- Fig. 11: in gleicher Ansicht ein rotierendes Wickelmodul,
- Fig. 12: eine abgewandelte Ausführungsform des Filtermoduls in Fig. 10, und
- Fig. 13: ein Wickelmodul in einer abgewandelten Ausführungsform.

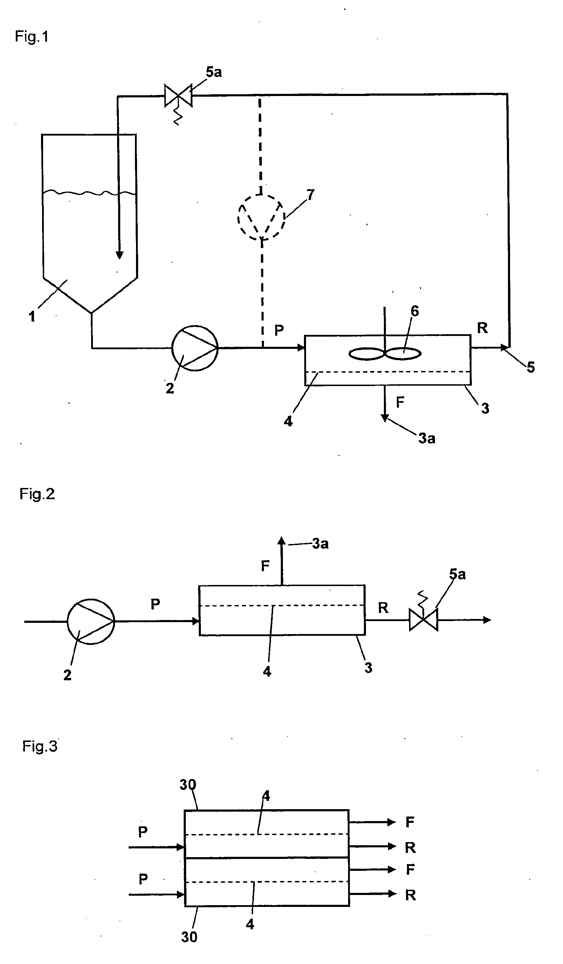

Das Prinzip der bekannten Querstromfiltration zeigt Fig. 1: ein mit einer Pumpe 2 unter Druck in ein Filtrationsmodul 3 zugeführter Produktstrom P an einer Filtermembran 4 entlanggeführt, wobei die eine abzutrennende Komponente durch die Membran austritt und als Permeat F abgeführt wird, während die zurückgehaltene Komponente bzw. das Retentat R durch eine Leitung 5 abgeführt und gegebenenfalls in den Behälter 1 über ein Druckhalteventil 5a zurückgeleitet wird. Es kann über dem Filter 4 ein Rührwerk 6 im Filterbereich 3 vorgesehen werden, damit sich das Retentat R, das eine höhere Dichte hat als das Permeat, nicht auf der Filterfläche 4 absetzt.

Geometrisch sind die Filter meist als Rohre, Wickel oder Plattenmodule mit Membranen zu beiden Seiten des Feedstroms ausgeführt, wobei die räumliche Anordnung aufgrund der starken feedseitigen Überströmung und Durchchmischung unbedeutend ist.

Bei dieser bekannten Querstromfiltration kann zur Verringerung des Energieeinsatzes an der Pumpe 2 auch eine zusätzliche Pumpe 7 zwischen Retentatstrom in der Leitung 5 und dem zum Filterbereich 3 strömenden Produktstrom vorgesehen werden, damit die Pumpe 2 im Wesentlichen nur für den Druckaufbau eingesetzt werden kann und die Förderung von Retentatdurchsatz durch die Pumpe 7 übernommen wird.

Bei der erfindungsgemäßen Filtration wird der Produktstrom P, wie in Fig. 2 gezeigt, unter dem Filter 4 in den Filterbereich 3 geführt, sodass der Permeatstrom bei 3a aus dem Bereich über dem Filter 4 abgeführt werden muss. Es hat sich in überraschender Weise gezeigt, dass auf diese Weise ohne zusätzliche Maßnahmen eine Verbesserung der Filterleistung erreicht wird, wie die nachfolgend wiedergegebenen Vergleichsbeispiele 1 bis 3 zeigen. Dies ist offensichtlich darauf zurückzuführen, dass sich der schwerere Retentatanteil des Produktstromes nicht an der Filterfläche ansetzt, sondern die Tendenz hat, sich durch Sedimentation vom Filter 4 abzusetzen. Hierdurch wird die Konzentrationsüberhöhung an der Filterfläche während des gesamten Filtervorgangs begrenzt, sodass aufgrund des im Produktstrom vorhandenen Drucks das Permeat ungestört nach oben durch den Filter 4 treten kann und durch die geringere Konzentration an der Membran auch die Permeatkonzentration geringer ist.

Anstelle eines im Produkt bzw. Produktstrom vorhandenen Drucks kann auch ein Unterdruck auf der Oberseite der Filterfläche 4 herrschen, sodass im Produktstrom selbst kein höherer Druck zu herrschen braucht.

Überraschenderweise werden die Vorteile des erfindungsgemäßen Verfahrens nicht nur bei Suspensionen, sondern auch bei Lösungen erzielt.

Auch hat sich überraschenderweise gezeigt, dass bei bestimmten Produkten die Vorteile der erfindungsgemäßen Anordnung der Filterfläche über dem Produkt auch dann erreicht werden, wenn keine oder keine dauernde Strömung längs der Filterfläche stattfindet. Dies ist z. B. bei der nachfolgend näher erläuterten Membrankristallisation der Fall.

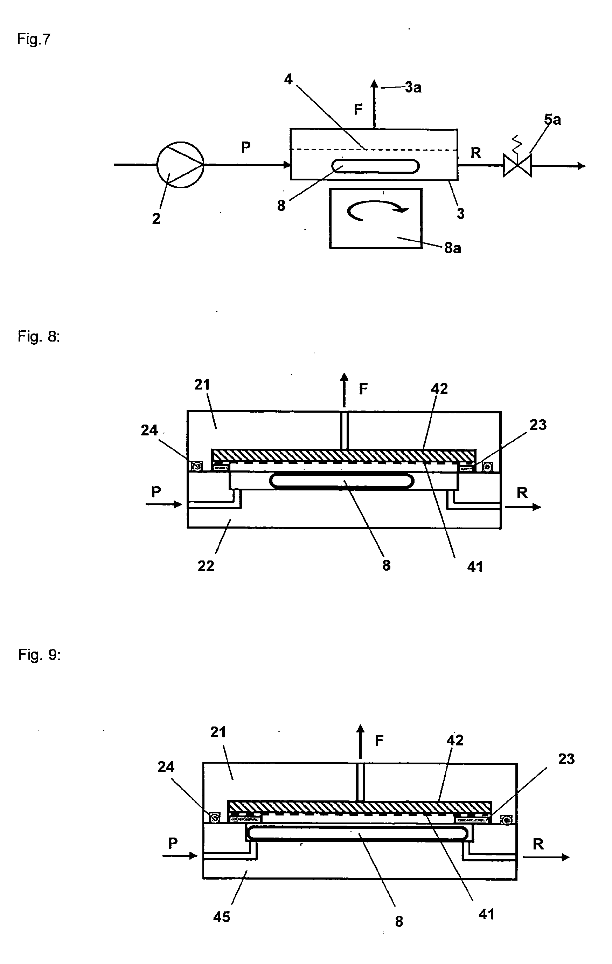

Die Anordnung der Membran über dem Produktstrom bietet ausserdem den Vorteil, dass ein Magnetrührer ohne Aufhängung auf dem Boden liegend unter der Membran rotieren kann, ohne diese zu beschädigen, diese Ausführungsvariante ist schematisch in Fig. 7 gezeigt. Fig. 8 und 9 zeigen je ein Ausführungsbeispiel: 21 und 22 sind der Filtermoduldeckel und Boden, 41 ist die Membran, 42 ein poröser Support, 23 und 24 sind Dichtungen und 8 ein Magnetrührstab. Die Dichtung 23 kann wie in Fig. 9 gezeigt soweit hervorstehen, dass die Membran gegen ein Hochspringen des Magnetrührers geschützt ist. Alternativ kann unter der Dichtung 23 eine ringförmige Scheibe hervorstehen um eine Berührung der Membran durch den Magnetrührer zu verhindern.

Anhand der Fig. 2 und 3 wird lediglich der Grundaufbau einer erfindungsgemäßen Filtervorrichtung für die Filtration erläutert, die z. B. in einer Anordnung nach Fig. 1 eingesetzt werden kann, wobei die druckerzeugende Pumpe dann nur noch soviel fördern muss, dass die Konzentration am Austritt des Filter- oder Membranmoduls nicht zu hoch ansteigt. Es sind verschiedene Abwandlungen möglich.

So kann beispielsweise der Filterbereich 3 als Plattenmodul 30 ausgebildet werden, sodass mehrere derartige Plattenmodule 30 übereinander gestapelt werden können, wie Fig. 3 zeigt, wobei in jedem Filterbereich eines Plattenmoduls eine über dem Produktstrom liegende ebene Filterfläche 4 vorgesehen ist, die in einem Abstand über einem geschlossenen Boden des Filterbereichs 30 liegt.

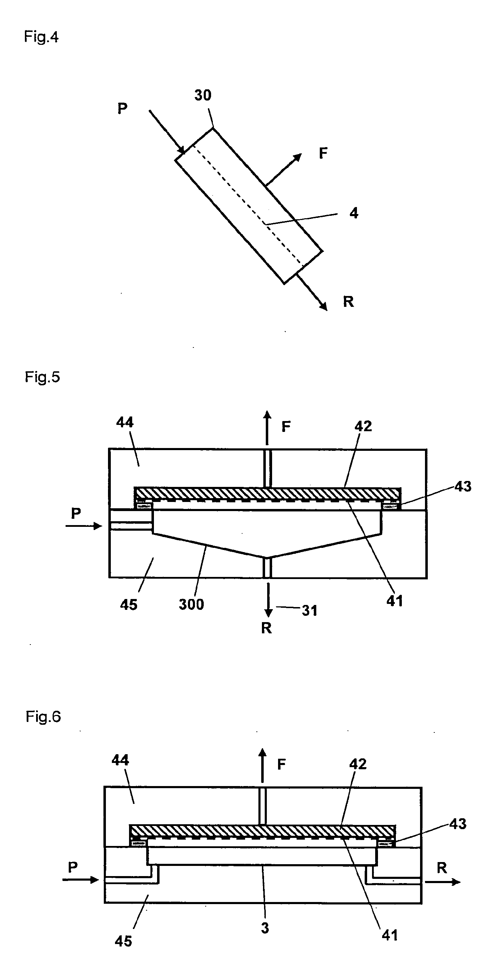

Die Filterfläche 4 kann gegenüber der dargestellten waagrechten Anordnung auch geneigt zur Waagrechten angeordnet sein, so, dass sich die Filterfläche 4 in Strömungsrichtung zur Strömung hin neigt, wie in Fig. 4 gezeigt. Weiterhin kann die Filterfläche auch quer zur Strömung gewölbt ausgebildet sein. Die Geometrie des Filtrationsbereichs kann an die jeweiligen Erfordernisse bzw. Produkte angepasst werden.

Im Falle eines rohrförmigen Filtrationsbereichs würde die untere Hälfte des Rohres geschlossen und die obere Hälfte oder ein Abschnitt der oberen Hälfte des Rohres als Filter- bzw. Membran ausgebildet im Gegensatz zu einem über den ganzen Umfang aus Filtermaterial ausgebildeten Rohr.

Weiterhin kann es zweckmäßig sein, die Pumpe, mittels der das Produkt in den Filtrationsbereich 3 zugeführt wird, pulsierend zu betreiben. Durch die pulsierende Zufuhr des Produkts bzw. Produktstromes kann die Filtrationswirkung verbessert werden.

Die beschriebene Filtervorrichtung ist vielfältig einsetzbar beispielsweise für Umkehrosmose z. B. im Meerwasserentsalzungsbereich, für Nanofiltration z. B. zur Aufkonzentrierung und Entsalzung von Produktlösungen, für die Ultrafiltration z. B. im Lebensmittelbereich bei Milchprodukten oder Trinkwasser oder auch für die Mikrofiltration sowie für Pervaporation.

Für einige Anwendungen ergibt sich durch das erfindungsgemäße Verfahren ein besonderer Nutzen.

Es eignet sich für die Miniaturisierung von Filtervorrichtungen, weil ein Rührwerk oder eine grosse Pumpe zur Erzeugung einer möglichst turbulenten Überströmung entfallen kann, sodass sehr kleine Anlagen realisiert werden können.

Bei der Membrankristallisation wird soweit konzentriert, dass die Lösung übersättigt ist und Kristalle ausfallen. Im herkömmlichen Querstrombetrieb werden die Kristalle durch die nötige hohe Überströmung der Filterfläche klein geschlagen und spätestens bei der Expansion durch das Druckhalteventil 5a in Fig. 1 zerkleinert. Bei der erfindungsgemäßen Anordnung ist diese Überströmung nicht nötig. Der Abzug der Kristalle kann unter der Filterfläche diskontinuierlich erfolgen. In der übrigen Zeit kann der zugeführte Produktstrom nur so hoch eingestellt werden, dass der Permeatstrom kompensiert wird. Es ist also kein Querstrombetrieb im üblichen Sinn erforderlich. Eine hierfür geeignete Vorrichtung ist in Fig. 5 gezeigt, bei der der Filterbereich 30 unterhalb der Membranfläche 41 trichterförmig ausgestaltet ist, um die an der Membran ausgefallenen Kristalle aufzunehmen, die als Suspension bei 31 abgeführt werden. Bei dieser Filtervorrichtung tritt keine Querströmung längs der Membranfläche auf, wie dies bei der Querstromfiltration der Fall ist.

Fig. 6 zeigt einen Membranaufbau 40 mit einem oben liegenden porösen Support 42 und einer darunter liegenden Trennschicht 41. Mit 43 ist eine Dichtung bezeichnet, mittels der die Membran 40 in einem zweiteiligen Gehäuse 44, 45 eingespannt ist.

Bei der osmotischen Energiegewinnung aus Meerwasser wird ein Filter bzw. eine Membran auf einer Seite mit Süßwasser und auf der anderen Seite mit Meerwasser überströmt. Wenn das Membranmodul als Plattenmodul ausgeführt ist und jeweils die Membran nur auf der Kanaloberseite angeordnet ist, ergeben sich folgende Vorteile:
Die im herkömmlichen Querstrombetrieb nötige hohe Überströmung sowohl der Süßwasserseite wie auch der Meerwasserseite entfällt.

Erfindungsgemäß wird Süßwasser nur unter der Membran und Meerwasser nur über der Membran geführt. Die jeweiligen Ströme müssen nur hoch genug sein, um genügend frisches Medium zuzuführen. Süßwasser diffundiert durch die Membran nach oben in die Salzlösung und steigt darin auf. Etwas Salz diffundiert in das Süßwasser und sinkt darin ab.

Im Fall des Trennprozesses Dialyse ist die treibende Kraft wie bei der Osmose ein Konzentrationsunterschied. Auch hier muss auf die Anordnung der Membran und Berücksichtigung der Dichte der beiden längs der Membran geführten Ströme geachtet werden, sodass sich eine spezifisch schwerere zurückzuhaltende Lösung unterhalb der Dialysemembran befindet.

Insbesondere eignet sich das erfindungsgemäße Verfahren auch für sehr empfindliche Produkte, weil auch ohne Rührwerk oder Überströmung, somit ohne Scherbeanspruchung des Produktes, gute Filtrationsleistungen erreicht werden.

Bei der Konzentrierung von Produkten oder Produktströmen muss bei der herkömmlichen Querstromfiltration eine hohe Überströmung der Filtermembran bewirkt werden. Das führt bei kontinuierlichen Anlagen dazu, dass Aufkonzentrierfaktor und Überströmung gekoppelt sind. Es müssen Modulanordnungen in der so genannten Tannenbaumstruktur oder mit vielen Rezirkulationspumpen aufgebaut werden. Bei der erfindungsgemäßen Membrananordnung ist diese Überströmung nicht nötig, daher kann der Konzentrierfaktor beliebig mit dem Verhältnis von Produktstrom zu Permeatstrom eingestellt werden.

Insgesamt werden durch das erfindungsgemäße Verfahren Vorteile insbesondere hinsichtlich geringem apparativem und energetischem Aufwand erzielt, die durch die herkömmliche Anordnung der Filter bzw. Membranfläche unter dem zu filternden Produkt nicht oder nur mit höheren Aufwand erzielt werden können.

Erfindungsgemäß wird ein druckgetriebenes Verfahren für die Membranseparation von Produktlösungen vorgesehen mit Flachmembranen unter Ausnutzung der Gravitation als einzigem Mittel zur Begrenzung der Konzentrationspolarisation, wobei die Membranfläche nur über dem zugeführten Produktstrom (Feed/Retentat) positioniert und das leichtere Permeat nach oben durch die Filterfläche abgeführt wird.

### Vergleichsbeispiel 1

Fig. 6 zeigt eine Testzelle ohne Rührer mit einem Filtrationsbereich 3 in einem zweiteiligen Gehäuse 44, 45, wobei der Membranaufbau 40 dem in Fig. 5 beschriebenen entspricht. Diese Testzelle ist mit einer aktiven Membranfläche 4 von 28 cm² versehen. Es wird eine Lösung von MgSO₄ in Wasser mit einer Konzentration von 4 g/l in einem Volumenstrom von 8 ml/min bei einem Betriebsdruck von 30bar als Produktstrom P zugeführt. Die eingesetzte Membran ist eine kommerzielle Nanofiltrationsmembran mit nominal mindestens 98% Rückhalt für Magnesiumsulfat. Die tangentiale Strömungsgeschwindigkeit in der Mitte des Moduls beträgt nur 0.37 mm/s. (Kanalquerschnitt in der Mitte 60 x 6mm = 360 mm², Volumenstrom = 8ml/min = 133 mm³/s).

Wenn die Membranfläche 4 nach Fig. 2 über dem Produktstrom angeordnet wird, ergibt sich ein Permeatstrom von 2 ml/min bei einer Permeatkonzentration von 0,04 g/l und einer Retentatkonzentration von 5,3 g/l.

Bei herkömmlicher Anordnung der Membran 4 in der Testzelle nach Fig. 1 unter dem Produktstrom ergibt sich unter sonst gleichen Bedingungen (ohne Rühreinrichtung) schon nach 30 Minuten ein Permeatstrom von nur 0,4 ml/min, wobei die Permeatkonzentration auf 0,4 g/l steigt.

Erst in der klassischen Betriebsweise mit ausreichend hoher Überströmgeschwindigkeit von z.B. 1 m/s kann die Anordnung eingesetzt werden, bei der der Feedstrom auch über die Membran geführt wird. 1 m/s in der Mitte des obigen Versuchsmoduls entspräche aber einem Feedvolumenstrom von 21 l/min und nicht 8 ml/min wie in der erfindungsgemässen Anordung und Betriebsweise.

In der erfindungsgemässen Anordnung mit Membran über dem Produktstrom kann die Überströmungsgeschwindigkeit unter 0.05 m/s oder 0.01 m/s gesenkt werden und auch eine weitere Absenkung hat keinen Nachteil. Es müssen dabei keine Einbauten im Strömungskanal vorgesehen werden, die zu einer Durchmischung des Produktstromes führen.

### Vergleichsbeispiel 2

In der gleichen Anordnung wie im Beispiel 1 wurde eine Farbstofflösung (Gelöstfarbstoff Remazol schwarz) eingesetzt.

Bei Betrieb mit Membran über dem Produktstrom von 8 ml/min und einer Produktkonzentration von 200.000 ppm ergab sich nach zehn Stunden Betrieb eine Permeatkonzentration von 12 ppm und ein Permeatfluss von 0,5 ml/min. Der Betriebsdruck betrug 30bar.

Wenn dagegen in der üblichen Weise die Membran unter dem Produktstrom angeordnet wurde, ergab sich bei sonst gleichen Betriebsbedingungen ein rapider Abfall des Permeatflusses. Nach einer Stunde wurde ein Permeatfluss von 0,04 ml/min gemessen. Die Permeatkonzentration war auf 104 ppm gestiegen. Selbst eine Steigerung des Druckes auf 60bar brachte keine Verbesserung.

Bei diesem Vergleichsbeispiel ergibt sich durch die erfindungsgemäße Anordnung und ohne schnelle Überströmung oder Turbulenzerzeugung im Feed ein zehnfach höherer Permeatfluss, wobei die Permeatkonzentration achtmal kleiner war als bei der herkömmlichen Anordnung.

### Vergleichsbeispiel 3

Eine Rührzelle mit kleinem Betriebsvolumen ist mit einem Magnetrührer 8 nach Fig. 7 versehen.

Wenn man bei der herkömmlichen Anordnung der Filterfläche 4 unter dem Produktstrom bzw. unter dem Rührer 8 den Magnetrührer abstellt, so bricht die Filtration nach kurzer Zeit zusammen, weil sich Retentat auf der Filterfläche absetzt.

Wenn dagegen erfindungsgemäß die Filterfläche über dem Produktstrom angeordnet ist und der Magnetrührer 8 entsprechend Fig. 7 unter der Filterfläche angeordnet wird, ergibt sich auch dann noch ein Permeatstrom nach oben durch die Filterfläche, wenn der Magnetrührer 8 abgestellt wird.

Dies geschieht nach Fig.8 dadurch, dass die Membran 41, oberhalb eines am Boden liegenden Magnetrührers 8 angeordnet ist. Dadurch kann ein unten liegender Magnetrührer die empfindliche Membran nicht mehr beschädigen.

Der Magnetrührer kann ein handelsübliches Magnetrührstäbchen aber auch ein anderes Rührorgan oder eine rotierende Scheibe sein, welche von unten magnetisch angetrieben wird.

Fig. 8 zeigt ein Ausführungsbeispiel einer erfindungsgemässen Rührzelle mit einem Deckel 21, einem Boden 22, der Filtermembran 41 unter einem porösen Support 42 und einem Magnetrührstäbchen 8. Die Abdichtung der Rührzelle erfolgt beispielsweise mit Dichtungen 23 und 24.

Fig.9 zeigt eine Abwandlung dieser erfindungsgemässen Rührzelle, wobei die Dichtung 23 selbst oder eine darunter liegende ringförmige Scheibe soweit hervorsteht, dass ein gelegentlich hochspringender Magnetrührer 8 nicht gegen die Membran stossen und diese beschädigen kann.

Eine Steigerung der Absetzgeschwindigkeit von der Membran zurückgehaltener Komponenten kann erfindungsgemäß auch durch ein rotierendes Filtermodul erreicht werden, um die zurückgehaltene Komponente daran zu hindern, sich an der Membranfläche anzulagern. Dies kann durch Rotation einer rohr- oder spiralförmigen Filtermembran erreicht werden, wobei durch Drehzahlerhöhung ein verstärkter Abtransport von zurückgehaltenen Komponenten von der Membranfläche möglich ist. Dadurch sind deutlich höhere Filtratströme erzielbar.

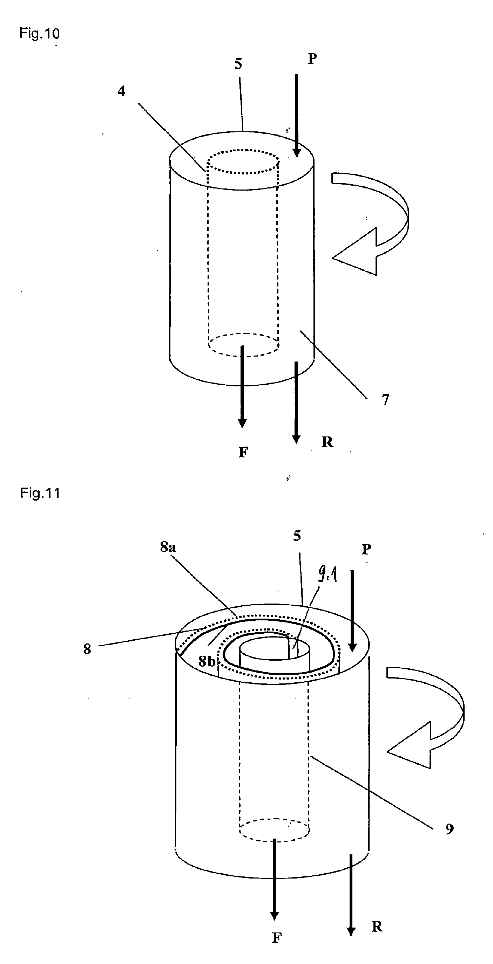

Es wird das ganze Filtermodul mit zentral angeordnetem Filterrohr bzw. ein Wickelmodul mit Membranfläche komplett in Rotation versetzt. Die Feedzufuhr erfolgt dann im mitrotierenden Aussen- bzw. Ringraum, wobei das Permeat im Zentralrohr des Wickelmoduls beziehungsweise im Inneren des Filtermoduls abgezogen wird. Diese Variante der Erfindung wird beispielsweise anhand der Fig. 10 bis 13 näher erläutert.

Erfindungsgemäß wird ein rotierendes Filtermodul vorgesehen, um die zurückgehaltene Komponente daran zu hindern, sich an der Membranfläche anzulagern. Dies kann durch Rotation einer rohr- oder spiralförmigen Filtermembran erreicht werden, wobei durch Drehzahlerhöhung ein verstärkter Abtransport von zurückgehaltenen Komponenten von der Membranfläche möglich ist. Dadurch sind deutlich höhere Filtratströme erzielbar.

Es wird das ganze Filtermodul mit zentral angeordnetem Filterrohr bzw. ein Wickelmodul mit Membranfläche komplett in Rotation versetzt. Die Feedzufuhr erfolgt dann im mitrotierenden Aussen- bzw. Ringraum, wobei das Permeat im Zentralrohr des Wickelmoduls beziehungsweise im Inneren des Filtermoduls abgezogen wird.

Fig. 10 zeigt ein Beispiel eines rohr- oder zylinderförmigen Filtermoduls 1 mit einem zylindrischen Gehäuse 5, in dem eine zylindrische bzw. rohrförmige Filtermembran 4 angeordnet ist. Filtermembran 4 und Gehäuse 5 rotieren zusammen. Das zu filtrierende Produkt P wird in den Ringraum zwischen Gehäuse 5 und Membran 4 zugeführt, Filtrat F wird durch Druck im Ringraum oder durch Unterdruck innerhalb der rohrförmigen Membran 4 durch das Filterrohr gedrückt. Schwerere, von der Filtermembran 4 zurückgehaltene Komponenten werden durch Zentrifugalkraft von der Filtermembran 4 wegtransportiert und im Retentat R nach unten aus dem Ringraum 7 ausgetragen.

Fig. 11 zeigt ein Beispiel eines Wickelmoduls, wobei in dem zylindrischen Gehäuse 5 ein spiralförmiger Wickel 8 aus einem zweilagigen Aufbau aus durchlässiger Membran 8a und undurchlässiger Schicht 8b angeordnet ist. Das eine Ende des Wickels 8 ist auf dem Innenumfang des Gehäuses 5 befestigt und das innere Ende des Wickels ist derart an einem zentralen Rohr 9 befestigt, dass der Zwischenraum zwischen den beiden Lagen 8a und 8b des Wickels durch Bohrungen oder einen Spalt 9.1 in das zentrale Rohr 9 mündet, das nicht aus Filtermaterial besteht.

Bei dem Ausführungsbeispiel nach Fig. 11 ist auf der Aussenseite der Wicklung 8 eine Filtermembran 8a vorgesehen, während die der Innenseite zugewandte Lage 8b aus einer undurchlässigen Folie ausgebildet ist. Zwischen den Lagen 8a und 8b wird eine Tasche gebildet, die in das zentrale Rohr 9 mündet. Zu filtrierendes Produkts P wird durch angelegten Differenzdruck von oben so in die Wickelspirale 8 gedrückt, dass die Filtermembran 8a von dem zu filtrierenden Produkt P überströmt wird, wobei durch die Drehbewegung des Moduls zurückgehaltene Komponenten radial nach außen gegen die Innenwand des Gehäuses 5 bzw. gegen die nichtdurchlässige Trägerschicht 8b gedrückt werden, während das durch die Filterfläche strömende Filtrat F in das zentrale Rohr 9 gelangt und aus diesem nach unten abgezogen wird. Die zurückgehaltene Komponente wird durch die Zentrifugalkraft von der Filterfläche ferngehalten und mit dem Retentat R nach unten ausgetragen, wie dies Fig. 11 zeigt.

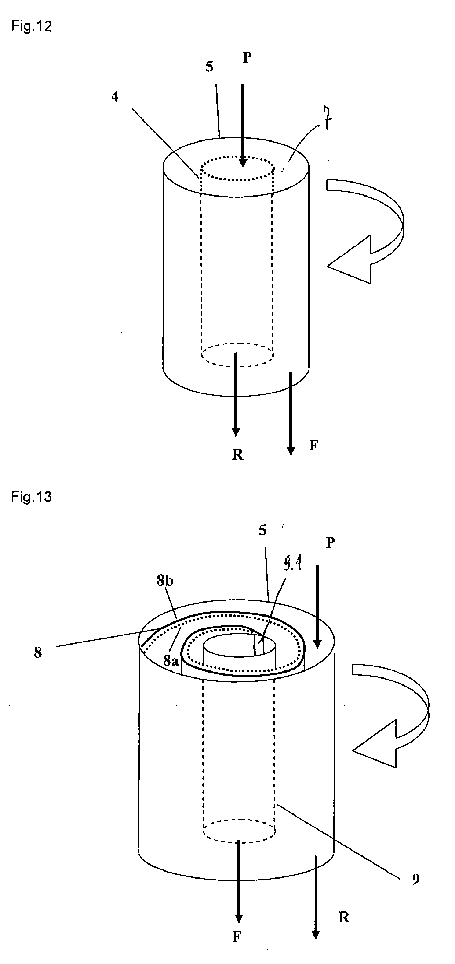

Das Ausführungsbeispiel nach Fig. 11 ist für ein zu filtrierendes Produkt geeignet, das eine relativ schwere zurückgehaltene Komponente enthält. Wenn die zurückgehaltene Komponente spezifisch leichter ist als das Filtrat, wird die Filterseite 8a im Wickel 8 auf der Innenseite angeordnet, wie dies Fig. 13 zeigt, in der bei 8a die Filtermembran und bei 8b die außen liegende undurchlässige Trägerschicht wiedergegeben ist.

Fig. 12 zeigt eine Fig. 10 entsprechende Ausführungsform, bei der zu filtrierendes Produkt P in das zentral angeordnete Filterrohr 4 von oben eingeführt und Retentat R aus diesem nach unten abgeführt wird, während Filtrat F aus dem Ringraum 7 nach unten abgeführt wird. Diese Ausführungsform eignet sich für ein Produkt P, das eine spezifisch leichtere zurückgehaltene Komponente als das Filtrat aufweist, während die Ausführungsform nach Fig. 10 für schwerere zurückgehaltene Komponenten und spezifisch leichteres Filtrat vorgesehen wird.

In allen Fällen kann bei einem erfindungsgemäss rotierendem Modul die Überströmung der Produktseite (P-R) gering gehalten werden. Dadurch erzielte Vorteile sind unter anderem: es kann für die Filtration von scherempfindlichen oder dickflüsssigen Produkten eingesetzt werden.

Bei den rotierenden Modulen kann der Ort der Zufuhr oben/unten auch vertauscht werden. Vorteilhaft ist die Ströme mit höherer spezifischer Dichte nach unten zu legen. Das Modul kann aber auch schräg oder liegend betrieben werden.

In den Fig. 10 bis 13 wird eine Vorrichtung für die Membranseparation von Produktgemischen vorgesehen, bestehend aus einem rotierenden Rohr- oder Wickelmodul, wobei die Filterfläche und das Gehäuse mit gleicher Winkelgeschwindigkeit rotieren und die Filterfläche bei einer spezifisch schwereren zurückzuhaltenden Komponente nur nach aussen oder bei einer spezifische leichteren zurückzuhaltenden Komponente nur nach innen gerichtet ist.

## Patentansprüche

1. Verfahren zum Separieren bzw. Filtrieren eines Produktes oder eines Produktstromes, wobei in einem Filtrationsbereich (3) eine Filter- bzw. Membranfläche (4) über dem Produkt bzw. Produktstrom (P) positioniert und die spezifische leichtere Komponente nach oben durch die Filterfläche (4) abgeführt wird.

2. Verfahren nach Anspruch 1, wobei der Produktstrom mit Strömungsgeschwindigkeit kleiner 0.05m/s gemessen im Strömungskanal unterhalb der Membran am Austritt des Moduls unter der Filter- bzw. Membranfläche (4) entlang geführt wird.

3. Verfahren nach Anspruch 1, wobei der Produktstrom mit Strömungsgeschwindigkeit kleiner 0.01 m/s gemessen im Strömungskanal unterhalb der Membran am Austritt des Moduls unter der Filter- bzw. Membranfläche (4) entlang geführt wird.

4. Verfahren nach Anspruch 1, wobei das Produkt bzw. der Produktstrom (P) unterhalb der Filterfläche (4) durch ein magnetisch angetriebenes Rührelement (8) gerührt wird, das von einem unter dem Boden der Rührzelle befindlichen Magnetantrieb gedreht wird.

5. Vorrichtung zum Filtern eines Produktgemisches oder eines Produktstromes, wobei die Filterfläche (4) über dem Produkt bzw. Produktstrom (P) angeordnet ist.

6. Vorrichtung für die Membranseparation von Produktlösungen nach Anspruch 5, mit Flachmembranen unter Ausnutzung der Gravitation als einzigem Mittel zur Begrenzung der Konzentrationspolarisation, wobei die Membranfläche nur über dem zugeführten Produktstrom (Feed/Retentat) positioniert ist und das leichtere Permeat nach oben durch die Filterfläche abgeführt wird.

7. Vorrichtung nach Anspruch 5 oder 6, wobei der Filtrationsbereich (3) als Plattenmodul ausgebildet ist.

8. Vorrichtung nach einem der Ansprüche 5 bis 7, wobei die Filtermembran waagrecht oder geneigt zur Horizontalen eingebaut ist.

9. Vorrichtung nach Anspruch 5, wobei unter der Filterfläche (4) ein Rührelement (8) angeordnet ist.

10. Vorrichtung nach Anspruch 9, wobei unter der Filterfläche (4) ein magnetisch angetriebenes Rührorgan (8) angeordnet ist, das auf dem Boden der Rührzelle liegt und durch einen unter dem Boden der Rührzelle befindlichen Magnetantrieb gedreht wird.

11. Vorrichtung nach Anspruch 10 wobei eine überstehende Dichtung oder ein Ring (43) die Membran (41) gegen Berührung durch den Magnetrührer (8) schützt.

12. Vorrichtung zum Filtern eines fluiden Produktes oder Produktstromes (P), umfassend eine rohrförmige Filtermembran (4), die in einem radialen Abstand von einem Gehäuse (5) umgeben ist, wobei der zwischen Filtermembran (4) und Gehäuse (5) gebildete Ring- bzw. Zwischenraum (7) mit einem Einlass für das Produkt (P) und einem Auslass für Retentat (R) versehen ist, die rohrförmige Filtermembran (4) einen Auslass für Filtrat aufweist, und das Gehäuse (5) mit darin angeordnetem Filterrohr (4) drehbar gelagert ist.

13. Vorrichtung zum Filtern eines fluiden Produktes oder Produktstromes (P), umfassend eine spiralförmige Wicklung (8) aus einem zweilagigen Aufbau, dessen eine Lage als Filtermembran (8a) und dessen andere Lage als undurchlässige Trägerschicht (8b) ausgebildet ist,
wobei das äußere Ende der Wicklung (8) mit dem Innenumfang eines die Wicklung umgebenden Gehäuses (5) und das radial innen liegende Ende mit einem rohrförmigen Körper (9) verbunden ist, der mit dem Zwischenraum zwischen den beiden Lagen (8a, 8b) der Wicklung (8) in Verbindung steht und durch den das Filtrat (F) abgeführt wird, wobei der Aufbau aus Gehäuse (5) mit darin angeordneter Wicklung (8) und Rohrkörper (10) drehbar gelagert ist.
